# FASCICULE DE BREVET EUROPEEN

(11) **EP 3 658 906 B1**
(45) Date de publication et mention de la délivrance du brevet: **07.07.2021**
(21) Numéro de dépôt: 18773793.7
(22) Date de dépôt: 24.07.2018
(51) Int. Cl.: G01N 25/72

(54) **SYSTÈME THERMOGRAPHIQUE**
THERMOGRAFISCHES SYSTEM
THERMOGRAPHIC SYSTEM

(30) Priorité: 24.07.2017 FR 1757010
(43) Date de publication de la demande: 03.06.2020
(73) Titulaire: Safran, 75015 Paris (FR)
(72) Inventeur: MAILLARD, Samuel, Louis, Marcel, Marie, 77550 Moissy-Cramayel (FR); GAY, Lionel, Christian, Jean-Loïc, 77550 Moissy-Cramayel (FR); CHAUVIN, Thierry, 77550 Moissy-Cramayel (FR); BAZIN, Benoît, 77550 Moissy-Cramayel (FR); VIASSONE, Thomas, Bernd, Paulo, 77550 Moissy-Cramayel (FR)
(74) Mandataire: Ernest Gutmann - Yves Plasseraud S.A.S.
(86) Numéro de dépôt international: PCT/FR2018/051895
(87) Numéro de publication internationale: WO 2019/020929

(56) Documents cités:
- WO-A2-2011/137547
- JP-A- 2004 020 336
- US-A1- 2003 230 717
- US-A1- 2005 056 786
- US-B1- 9 519 844

## Description

La présente invention concerne un système thermographique destiné par exemple au contrôle non destructif de pièces de turbomachine telles que des aubes de turbine par exemple.

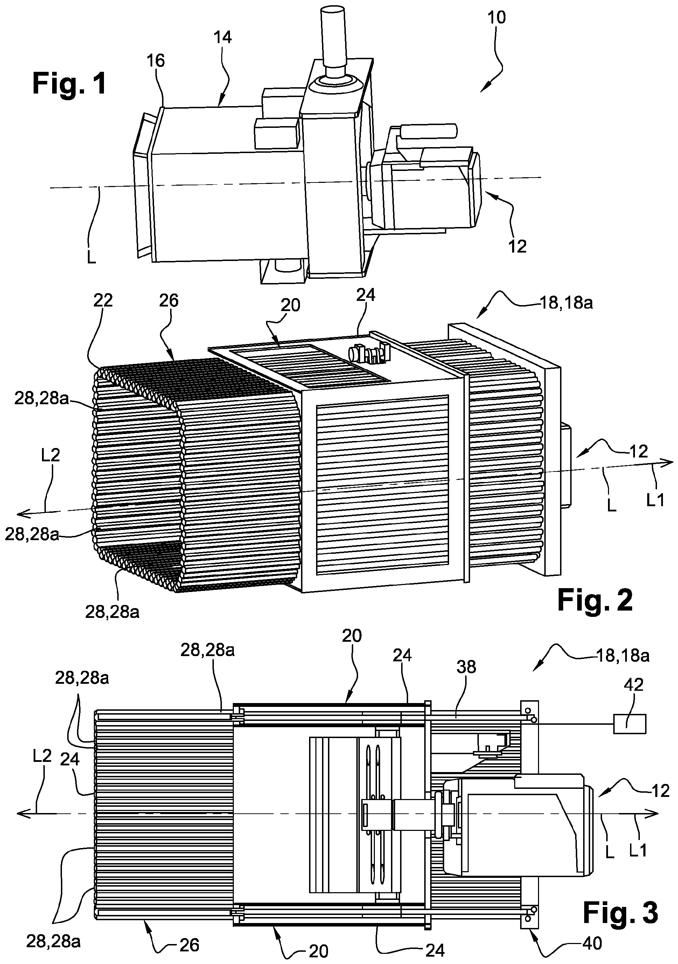

Dans la technique connue représentée en figure 1, un système thermographique 10 utilisé pour effectuer un contrôle non destructif, comprend une caméra infrarouge associée à une source d'excitation thermique (non représentée). La caméra infrarouge est agencée à une extrémité d'un conduit 14 d'axe longitudinal L servant au guidage du rayonnement émis par la source d'excitation thermique agencée dans le conduit et jusqu'à une extrémité de sortie 16 du conduit.

Une opération de contrôle non destructif par thermographie, s'effectue en positionnant la zone à contrôler d'une pièce à une distance optimale fonction des moyens de prise d'images 12, c'est-à-dire de manière à ce que la zone observée soit placée sensiblement dans le plan focal des moyens 12 de prises d'images. En outre, il est souhaitable de maintenir un espacement longitudinal entre le bord libre 16 du conduit 14 de guidage et la pièce afin de permettre une évacuation de la chaleur générée par le rayonnement de la source d'excitation et également d'éviter un contact entre le bord libre 16 du conduit 14 et la pièce qui conduirait à un transfert de chaleur par conduction du conduit 14 vers la pièce qui détériorait la pièce. Un tel système thermographique est décrit par exemple dans US 9 519 844 B1.

Toutefois, lorsque la zone de la pièce à analyser est concave, il peut être difficile de positionner optiquement ladite zone de manière optimale par rapport aux moyens 12 de prises d'images du fait que le bord libre 16 peut venir en contact avec la pièce. Il n'est alors pas possible d'avoir la bonne distance entre la portion centrale de la zone observée et les moyens 12 de prises d'images. Il convient alors d'éloigner les moyens 12 de prises d'images, ce qui modifie la résolution spatiale de la mesure et modifie la quantité d'énergie déposée par les moyens d'excitation thermique. A l'inverse, lorsque la zone observée est convexe, la distance entre le centre de la zone observée et les moyens 12 de prises d'images est acceptable au centre mais cette distance augmente vers la périphérie de la zone observée. Ainsi, on observe une dispersion du rayonnement d'excitation thermique sur les bords du conduit 14 puisque la distance longitudinale entre le bord libre 16 et la pièce y est plus importante.

L'invention a notamment pour but d'apporter une solution simple, efficace et économique aux problèmes précités.

A cet effet, l'invention propose un système thermographique comprenant des moyens de prise d'image infrarouge, une source de rayonnement d'excitation thermique d'une pièce à contrôler et un conduit de guidage du rayonnement d'excitation selon une direction longitudinale jusqu'à une sortie du conduit située au niveau d'un bord libre de celui-ci, caractérisé en ce que le bord libre du conduit est déformable selon l'axe longitudinal selon un premier sens orienté de la sortie du conduit vers les moyens de prises d'images et en ce qu'il comprend des moyens de rappel du bord libre dans sa forme initiale ainsi que des moyens de maintien dudit bord libre du conduit dans un état déformé.

Selon l'invention, le bord libre du conduit est apte à se déformer et à conserver sa déformation, ce qui permet de le conformer avec une forme correspondante au bord de la zone de la pièce qui est destinée à être observée avec les moyens de prises d'images suite à une illumination de la pièce par le rayonnement d'excitation. Ce cette manière, il est possible d'avoir un meilleur positionnement longitudinal des moyens de prises d'images en regard de la zone de la pièce à contrôler, plus particulièrement un meilleur positionnement de l'intégralité de la zone à contrôler dans la zone focale des moyens de prises d'image. De plus, la conformation du bord libre selon la périphérie de zone de la pièce à examiner permet d'avoir une distance longitudinale constante entre le libre et la pièce, ce qui permet de bien contrôler l'évacuation de la chaleur due au rayonnement. Les moyens de rappel permettent de ramener le bord libre dans sa forme initiale, c'est-à-dire dans un second sens opposé au premier sens.

Selon l'invention, la source d'excitation est une source émettrice d'un rayonnement électromagnétique apte à exciter thermiquement une partie d'une pièce recevant ledit rayonnement. Le rayonnement émis par la source peut être

Selon une caractéristique, le conduit peut comprendre un caisson tubulaire d'axe longitudinal portant les moyens de prises d'images et des organes allongés longitudinalement formant le bord libre du conduit et qui sont mobiles indépendamment les uns des autres selon une direction parallèle à l'axe longitudinal relativement au caisson.

Le déplacement longitudinal des tiges permet ainsi d'adapter l'extrémité libre du conduit à la forme de la pièce. En pratique, on comprend que le nombre d'organes allongés détermine la précision d'adaptation de la forme du bord libre du conduit à la périphérie de la zone à observer.

Selon encore une autre caractéristique, les organes mobiles sont montés à coulissement, selon l'axe longitudinal, les uns relativement aux autres sur le caisson.

Dans une réalisation particulière, les organes mobiles sont montés à coulissement à étanchéité dans des corps tubulaires solidaires du caisson et reliés aux moyens de rappel.

Dans une variante de l'invention, les moyens de rappel comprennent des vérins, par exemple pneumatique, solidaires du caisson de préférence portés par le caisson.

Les moyens de rappel peuvent également comprendre des moyens d'alimentation en air sous pression des corps tubulaires du boitier, les organes mobiles étant par exemple des tiges.

Egalement, les moyens de maintien peuvent comprendre au moins une réglette d'appui sur les organes mobiles, dans une direction perpendiculaire à la direction longitudinale.

Dans une réalisation pratique de l'invention, les organes mobiles sont des lamelles, ces lamelles pouvant par exemple coopérer à coulissement chacune avec des lamelles adjacentes par coopération de forme.

Le conduit de guidage peut avoir une section rectangulaire. D'autres formes sont bien évidemment envisageables telles que des sections circulaires par exemple.

L'invention concerne également un procédé d'utilisation du système thermographique décrit ci-dessus, le procédé consistant à :
- agencer l'extrémité libre du conduit en contact avec une zone donnée d'une pièce à contrôler et rapprocher ladite extrémité libre du conduit de la pièce jusqu'à ce que ledit bord libre prenne la forme de la périphérie de la zone donnée à contrôler ;
- actionner les moyens de maintien de manière à maintenir ledit bord libre dans l'état de forme obtenu à l'étape précédente,
- déplacer le conduit longitudinalement dans le second sens de manière à éloigner son bord libre de la pièce à contrôler d'une distance donnée.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1, déjà décrite précédemment, est une vue schématique en perspective d'un système thermographique selon la technique connue ;
- les figures 2 et 3 sont des vues schématiques en perspective d'un système thermographique selon une première réalisation de l'invention ;
- la figure 4 est une vue schématique d'un organe mobile du système thermographique des figures 2 et 3 ;
- les figures 5 et 6 sont des vues schématiques en perspective d'un système thermographique selon une deuxième réalisation de l'invention ;
- la figure 7 est une vue schématique en perspective d'une troisième réalisation de l'invention ;
- la figure 8 est une vue schématique en perspective d'un système thermographique selon une quatrième réalisation de l'invention ;
- la figure 9 est une vue schématique du coulissement d'un organe mobile du système thermographique de la figure 8.

Dans les différentes réalisations du système thermographique 18 selon l'invention, celui-ci comprend un conduit 20 de guidage d'un rayonnement d'excitation thermique et des moyens 12 de prises d'images infrarouge. Le conduit 20 comprend un bord libre 22 agencée au niveau d'une sortie du conduit 20, les moyens 12 de prises d'images étant agencés au niveau d'une extrémité du conduit 20 opposée audit bord libre 22. Les moyens d'émission du rayonnement d'excitation sont agencés à l'intérieur du conduit d'axe longitudinal et ne sont pas spécifiquement représentés puisqu'ils sont bien connus de l'état de la technique. Ces moyens d'émission du rayonnement d'excitation sont configurés pour émettre un rayonnement d'excitation vers la sortie du conduit 20 afin que lorsque ledit bord libre 22 du conduit 20 est placé en regard d'une zone donnée de la pièce à contrôler, le rayonnement d'excitation puisse impacter ladite zone.

Le conduit 20 comprend un axe longitudinal L comportant un premier sens L1 orienté du bord libre du conduit c'est-à-dire de la sortie du conduit 20 vers les moyens 12 de prises d'images, et un second sens L2 opposé au premier sens L1.

Le conduit 20 comprend deux parties une partie statique ou caisson tubulaire 24 portant les moyens 12 de prises d'images ainsi que les moyens d'émission du rayonnement d'excitation thermique ou source d'excitation thermique et une partie mobile 26 relativement au caisson tubulaire 24 dans la direction longitudinale L.

Plus particulièrement, la partie mobile 26 comprend une pluralité d'organes mobiles 28 ayant une forme allongée dans la direction longitudinale L et qui sont déplaçables individuellement les uns par rapport aux autres dans ladite direction longitudinale L relativement au caisson 24.

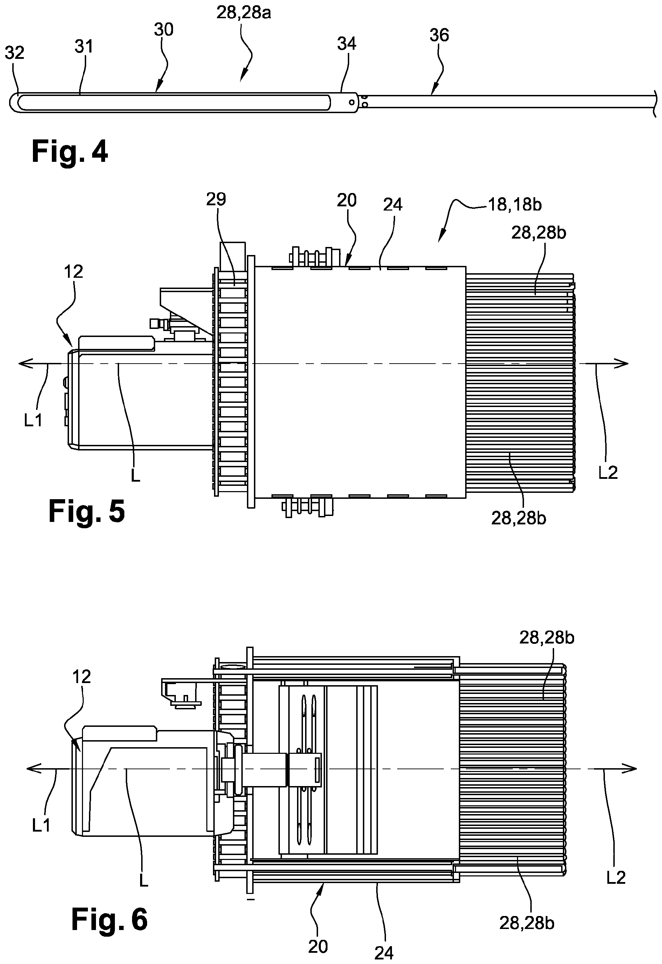

Dans une première réalisation représentée en figures 2 et 3, les organes mobiles 28 du système thermographique 18a sont des tiges 28a juxtaposées les unes à côté des autres, chaque tige 28a étant apte à coulisser longitudinalement par rapport à deux tiges 28a adjacentes. Chaque tige 28a comprend une première partie 30 à section hexagonale et comprenant une ouverture traversante 31 comme représentée en figure 4 pour évacuer la chaleur du rayonnement. Notons que cette première partie pourrait être dépourvue d'ouverture. De manière générale et indépendamment de sa forme et de la présence ou non d'ouvertures, la première partie 30 est réalisée dans un matériau ayant un faible coefficient de conduction thermique et qui est apte à peu réfléchir le rayonnement d'excitation thermique afin de concentrer l'énergie du rayonnement sur la pièce. Cette première partie 30 comprend une extrémité libre 32 destinée à venir en appui sur la pièce à contrôler et une seconde extrémité 34 opposée reliée à une seconde partie 36, par exemple en matériau métallique, engagée à coulissement dans des corps tubulaires 38 solidaires du caisson 24 (figure 3). Comme cela est visible sur les figures 2 et 3, l'extrémité du caisson 24 portant les moyens 12 de prises d'images est reliée à un cadre 40 supportant les corps tubulaires 38 s'étendant longitudinalement. Les extrémités distales des corps tubulaires 38 du cadre 40 sont reliées à des moyens 42 d'alimentation en air sous pression tels que ceux présents dans une usine de fabrication/maintenance aéronautique.

Pour effectuer une opération de contrôle non destructif, le bord libre 22 du conduit 20, c'est-à-dire les extrémités libres des premières parties 30 des tiges 28a sont amenées en vis-à-vis longitudinalement de la pièce. Les tiges 28a étant aptes à coulisser longitudinalement, le système thermographique est rapproché de la pièce afin que ledit bord libre 22 du conduit 20 prenne la forme de la périphérie de la zone donnée à contrôler. On comprend que pour réaliser le déplacement des tiges 28a, les corps tubulaires 38 sont mis à l'échappement afin de ne pas exercer de pression inutile sur la pièce. Les moyens 42 d'alimentation en air sous pression agissent ici comme des moyens de rappel, tendant, en fonctionnement, à redonner au bord libre 22 sa forme initiale, ce qui permet de bien contrôler le déplacement des tiges 28a au plus près de la forme de la pièce. Les tiges 28a mobiles sont ensuite bloquées en coulissement relativement au caisson 24 par des moyens de maintien formés ici par les moyens 42 d'alimentation en air sous pression dont l'échappement est bloqué ce qui permet de maintenir l'état déformé du bord libre 22 du conduit 20. Le système thermographique est ensuite reculé d'une distance donnée afin d'effectuer immédiatement après le contrôle par thermographie. Le dispositif 18, 18a permet ainsi un meilleur positionnement de l'intégralité de la zone à contrôler dans la zone de mise au point des moyens 12 de prises d'images. Egalement, on note qu'il est possible d'avoir une distance constante entre la pièce et le bord libre 11 du conduit 20, ce qui permet de mieux contrôler l'évacuation de la chaleur générée par le rayonnement d'excitation.

Les figures 5 et 6 représentent une deuxième réalisation d'un système thermographique 18b de l'invention sensiblement similaire à celle décrite en référence aux figures 2 et 3 puisque les organes mobiles 28 sont également des tiges 28b. Ces tiges 28b sont engagées à coulissement dans des tubes 29. Les tiges 28b et les tubes 29 peuvent avoir une section circulaire. Une enveloppe serpente entre les extrémités distales des tubes 29 et assure un maintien des tiges dans une position donnée.

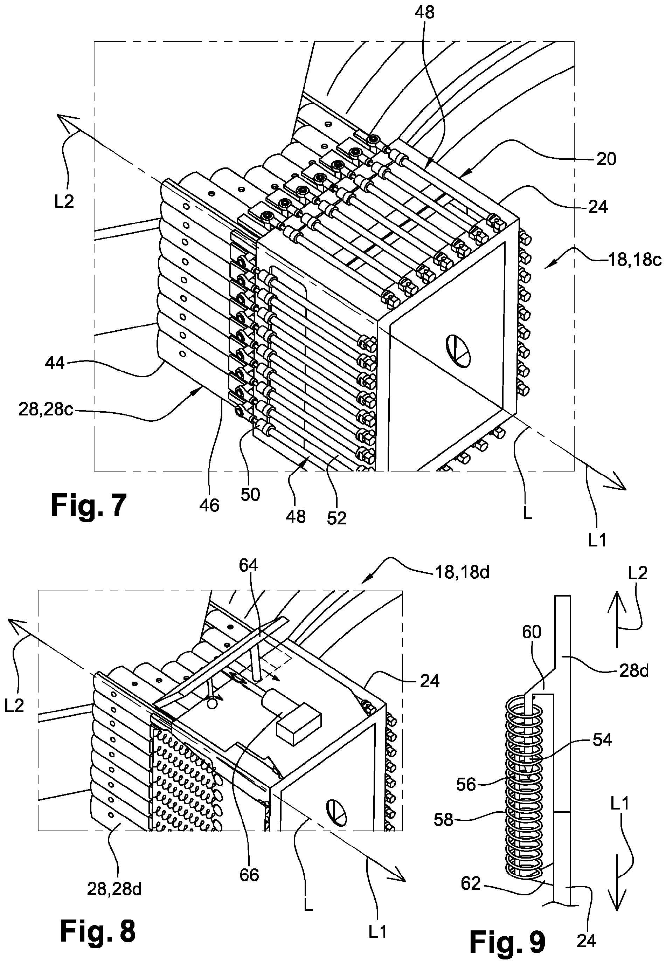

La figure 7 représente une troisième réalisation d'un système thermographique 18, 18c dans lequel les organes mobiles 28 sont formés par des lamelles 28c juxtaposées jointivement à coulissement les unes à côté des autres. Chaque lamelle 28c comprend une première extrémité 44 et une seconde extrémité 46. Elle comprend également un premier bord latéral comprenant une rainure et un second bord latéral opposé comprenant une nervure. Pour assurer un coulissement d'une lamelle donnée par rapport à ses deux lamelles adjacentes, la rainure du premier bord latéral de ladite lamelle reçoit une nervure d'une lamelle adjacente et la nervure du second bord de ladite lamelle est engagée dans une rainure d'une lamelle adjacente.

Le caisson 24 porte des vérins 48 de rappel du déplacement des lamelles 28c en position initiale. Chaque vérin 48 comprend une tige 50 de piston engagée dans un corps 52 de vérin. Les vérins 48 s'étendent longitudinalement. Une première extrémité de la tige 50 est fixée à la lamelle 28c et une seconde extrémité est engagée à coulissement dans le corps 52 du vérin. Dans cette réalisation, le maintien du bord libre 44 du conduit 20 est réalisé par le maintien de chaque tige 50 dans une position donnée en bloquant l'échappement des vérins.

Le caisson 24 comprend des moyens de guidage à coulissement des lamelles 28c. Ces moyens de guidage peuvent, par exemple, comprendre des logements longitudinaux formés dans l'épaisseur des parois du caisson.

Les figures 8 et 9 représentent une quatrième réalisation d'un système thermographique 18d sensiblement similaire à la troisième réalisation représentée en figure 7. La coopération à coulissement des lamelles 28d les unes avec les autres est identique à ce qui a été décrit en référence à la figure 7. Dans cette réalisation, chaque lamelle 28d porte une première patte 54 s'étendant dans le premier sens L1 et le caisson 24 comprend une seconde patte 56 s'étendant dans le second sens L2. Un ressort hélicoïdal 58 est monté autour de la première partie 54 et de la seconde partie 56. A l'état non déformé du bord libre, les ressorts 58 hélicoïdaux 58 sont compressés de manière à exercer une force orientée dans le second sens L2. Les extrémités des ressorts 58 sont en appui sur des rebords 60, 62 des lamelles 28d et du caisson 24 réalisant, respectivement, la jonction des premières parties 54 avec les lamelles 28d et des secondes parties 56 avec le caisson 24.

Les moyens de maintien comprennent, dans cette quatrième réalisation, une réglette 64 articulée à déplacement par un vérin 66 entre une position où elle est située à distance des lamelles 28d et une position d'appui sur les lamelles selon 28d une direction perpendiculaire à l'axe longitudinal L. Plus spécifiquement, lorsque le caisson 24 à une section rectangulaire, le caisson 24 peut supporter quatre vérins, chacun étant associé à une réglette. Un couple vérin/réglette assurant le blocage des lamelles d'un côté de la forme rectangulaire. Les quatre vérins sont reliés à des moyens de commande communs permettant de bloquer simultanément toutes les lamelles.

Le conduit pourrait avoir une section autre que rectangulaire et pourrait avoir une forme circulaire ou bien encore différente de manière à s'adapter au mieux à la forme de la zone de la pièce à contrôler.

Dans les différentes réalisations représentées aux figures, les organes mobiles sont chacun déplaçables entre une position de sortie dans laquelle les organes mobiles sont quasi totalement sortie des tubes ou corps tubulaire, une position intermédiaire correspondant à une position de contrôle non destructif et une position rentrée dans laquelle les organes mobiles sont rentrés dans les tubes ou corps tubulaires. Lors d'une opération de contrôle non destructif d'une zone donnée d'une pièce, il est possible de déplacer les tiges vers leur position rentrée afin de permettre une régénération de l'air à l'intérieur du conduit et éviter son échauffement qui pourrait avoir un impact sur la mesure de thermographie de la zone donnée contrôlée de la pièce.

## Revendications

1. Système thermographique comprenant des moyens de prise d'image infrarouge (12), une source d'excitation thermique d'une pièce et un conduit de guidage (18) du rayonnement selon une direction longitudinale (L) jusqu'à une sortie du conduit (18) située au niveau d'un bord libre de celui-ci, **caractérisé en ce que** le bord libre (28) du conduit (18) est déformable selon l'axe longitudinal (L) selon un premier sens (L1) orienté de la sortie du conduit (18) vers les moyens de prises d'images (12) et **en ce qu'**il comprend des moyens de rappel du bord libre dans sa forme initiale ainsi que des moyens de maintien dudit bord libre du conduit (18) dans un état déformé.

2. Système selon la revendication 1, **caractérisé en ce que** le conduit (18) comprend un caisson tubulaire (24) d'axe longitudinal portant les moyens de prises d'images et des organes allongés longitudinalement formant le bord libre du conduit et qui sont mobiles indépendamment les uns des autres selon une direction parallèle à l'axe longitudinal relativement au caisson.

3. Système selon la revendication 2, **caractérisé en ce que** les organes mobiles sont montés à coulissement, selon l'axe longitudinal les uns relativement aux autres sur le caisson (24).

4. Système selon la revendication 2 ou 3, **caractérisé en ce que** les organes mobiles (28) sont montés à coulissement à étanchéité dans des corps tubulaires solidaires (38) du caisson et reliés aux moyens de rappel.

5. Système selon la revendication 4, **caractérisé en ce que** les moyens de rappel comprennent des vérins, par exemple pneumatique, solidaires du caisson.

6. Système selon la revendication 4, **caractérisé en ce que** les moyens de rappel comprennent des moyens d'alimentation en air sous pression des corps tubulaires du boîtier, les organes mobiles (28) étant par exemple des tiges.

7. Système selon la revendication 2 seule ou en combinaison avec l'une des revendications 3 à 6, **caractérisé en ce que** les moyens de maintien comprennent au moins une réglette (64) d'appui sur les organes mobiles (28d), dans une direction perpendiculaire à la direction longitudinale (L).

8. Système selon l'une des revendications précédentes et la revendication 2, **caractérisé en ce que** les organes mobiles sont des lamelles (28d).

9. Système selon l'une des revendications précédentes, **caractérisé en ce que** le conduit (18) de guidage à une section rectangulaire.

10. Procédé d'utilisation du système selon l'une des revendications précédentes, **caractérisé en ce qu'**il consiste à :
- agencer l'extrémité libre du conduit (18) en contact avec une zone donnée d'une pièce à contrôler et rapprocher ladite extrémité libre du conduit (18) de la pièce jusqu'à ce que ledit bord libre prenne la forme de la périphérie de la zone donnée à contrôler ;
- actionner les moyens de maintien de manière à maintenir ledit bord libre dans l'état de forme obtenu à l'étape précédente,
- déplacer le conduit longitudinalement dans le second sens de manière à éloigner son bord libre de la pièce à contrôler d'une distance donnée.

## Patentansprüche

1. Thermographisches System mit Mitteln (12) zur Aufnahme eines Infrarotbildes, einer Quelle zur thermischen Anregung eines Teils und mit einem Leitkanal (18) zum Leiten der Strahlung in einer Längsrichtung (L) bis zu einem Auslass des Kanals (18), der sich an einem freien Rand desselben befindet, **dadurch gekennzeichnet, dass** der freie Rand (28) des Kanals (18) entlang der Längsachse (L) in einer ersten Richtung (L1) verformbar ist, die vom Auslass des Kanals (18) zu den Bildaufnahmemitteln (12) hin ausgerichtet ist, und dass es Rückstellmittel zum Rückstellen des freien Randes in seine ursprüngliche Form und Mittel zum Halten des freien Randes des Kanals (18) in einem verformten Zustand enthält.

2. System nach Anspruch 1, **dadurch gekennzeichnet, dass** der Kanal (18) einen rohrförmigen Kasten (24) mit einer Längsachse enthält, der die Bildaufnahmemittel trägt, sowie in Längsrichtung langgestreckte Elemente, die den freien Rand des Kanals bilden und die unabhängig voneinander in einer Richtung parallel zur Längsachse relativ zum Kasten beweglich sind.

3. System nach Anspruch 2, **dadurch gekennzeichnet, dass** die beweglichen Elemente entlang der Längsachse relativ zueinander verschiebbar am Kasten (24) gelagert sind.

4. System nach Anspruch 2 oder 3, **dadurch gekennzeichnet, dass** die beweglichen Elemente (28) in rohrförmigen Körpern (38), die fest mit dem Kasten verbunden sind, abgedichtet verschiebbar gelagert und mit den Rückstellmitteln verbunden sind.

5. System nach Anspruch 4, **dadurch gekennzeichnet, dass** die Rückstellmittel Kraftzylinder aufweisen, die beispielsweise pneumatisch ausgebildet und fest mit dem Kasten verbunden ist.

6. System nach Anspruch 4, **dadurch gekennzeichnet, dass** die Rückstellmittel Mittel zum Zuführen von Druckluft zu den rohrförmigen Körpern des Gehäuses enthalten, wobei die beweglichen Elemente (28) beispielsweise Stangen sind.

7. System nach Anspruch 2 allein oder in Kombination mit einem der Ansprüche 3 bis 6, **dadurch gekennzeichnet, dass** die Haltemittel mindestens eine Abstützleiste (64) zum Abstützen an den beweglichen Elementen (28d) in einer Richtung senkrecht zur Längsrichtung (L) enthalten.

8. System nach einem der vorhergehenden Ansprüche und Anspruch 2, **dadurch gekennzeichnet, dass** die beweglichen Elemente Lamellen (28d) sind.

9. System nach einem der vorhergehenden Ansprüche, **dadurch gekennzeichnet, dass** der Leitkanal (18) einen rechteckigen Querschnitt aufweist.

10. Verfahren zur Verwendung des Systems nach einem der vorhergehenden Ansprüche, **dadurch gekennzeichnet, dass** es umfasst:
- Anordnen des freien Endes des Kanals (18) in Kontakt mit einem gegebenen Bereich eines zu prüfenden Teils und Annähern des freien Endes des Kanals (18) an das Teil, bis der freie Rand die Form des Umfangs des gegebenen zu prüfenden Bereichs annimmt;
- Betätigen der Haltemittel derart, dass der freie Rand in dem im vorherigen Schritt erhaltenen Formzustand gehalten wird,
- Bewegen des Kanals längs in der zweiten Richtung derart, dass sein freier Rand um eine gegebene Strecke von dem zu prüfenden Teil wegbewegt wird.

## Claims

1. A thermographic system comprising infrared imaging means (12), a source for thermal excitation of a part and a duct (18) for guiding the radiation in a longitudinal direction (L) to an outlet of the duct (18) located at a free edge thereof, **characterized in that** the free edge (28) of the duct (18) is deformable along the longitudinal axis (L) in a first direction (L1) oriented from the outlet of the duct (18) towards the imaging means (12) and **in that** it comprises means for returning the free edge to its initial shape and means for holding said free edge of the duct (18) in a deformed state.

2. A system according to claim 1, **characterized in that** the duct (18) comprises a tubular box (24) with a longitudinal axis carrying the imaging means and longitudinally elongated members forming the free edge of the duct and which are movable independently of one another in a direction parallel to the longitudinal axis relative to the box.

3. A system according to claim 2, **characterized in that** the movable members are mounted on the box (24) so as to slide relative to one another along the longitudinal axis.

4. A system according to claim 2 or 3, **characterized in that** the movable members (28) are sealingly mounted so as to slide in tubular bodies (38) integral with the box and connected to the return means.

5. A system according to claim 4, **characterized in that** the return means comprise cylinders, for example pneumatic cylinders, integral with the box.

6. A system according to claim 4, **characterized in that** the return means comprise means for supplying pressurized air to the tubular bodies of the box, the movable members (28) being for example rods.

7. A system according to claim 2 alone or in combination with one of claims 3 to 6, **characterised in that** the holding means comprise at least one strip (64) for bearing on the movable members (28d) in a direction perpendicular to the longitudinal direction (L).

8. A system according to one of the preceding claims and claim 2, **characterized in that** the movable members are lamellae (28d).

9. A system according to one of the preceding claims, **characterised in that** the guide duct (18) has a rectangular section.

10. A method for using the system according to one of the preceding claims, **characterised in that** it consists in:
- arranging the free end of the duct (18) in contact with a given area of a part to be tested and bringing said free end of the duct (18) closer to the part until said free edge takes the shape of the periphery of the given area to be tested;
- actuating the holding means so as to hold said free edge in the shape state obtained in the preceding step,
- moving the duct longitudinally in the second direction so as to move its free edge away from the part to be tested by a given distance.
